# EUROPEAN PATENT APPLICATION

(11) **EP 1 770 102 A1**
(43) Date of publication of application: **04.04.2007**
(21) Application number: 06020406.2
(22) Date of filing: 28.09.2006
(51) Int. Cl.: C08F 4/659, C08F 10/00, C08F 4/02

(54) **Process for producing prepolymerized supported metallocene catalyst, the catalyst thereof and its use in the polymerization of olefin.**

(30) Priority: 30.09.2005 JP 2005286847
(71) Applicant: Sumitomo Chemical Company, Limited, Tokyo 104-8260 (JP)
(72) Inventor: Goto, Tomoaki, Sodegaura-shi Chiba-ken (JP); Okado, Yoshiya, Sodegaura-shi Chiba-ken (JP)
(74) Representative: Vossius & Partner

(57) **Abstract**

A process for producing a prepolymerization catalyst component which contains contacting a co-catalyst support (A), a metallocene compound (B) and an organoaluminum compound (C) to obtain a contact-treated product, and prepolymerizing an olefin in the presence of the contact-treated product, the process containing the following steps (1), (2) and (3):
step (1): a step of subjecting a saturated aliphatic hydrocarbon compound solvent containing the metallocene compound (B) to a heat treatment at 40°C or higher;
step (2): a step of subjecting the heat treatment product obtained by the heat treatment in the step (1) to a contact treatment with the co-catalyst support (A); and
step (3): a step of subjecting the contact treatment product obtained by the contact treatment in the step (2) to a contact treatment with the organoaluminum compound (C).

## Description

The present invention relates to a process for producing a prepolymerization catalyst component, a prepolymerization catalyst component produced by the process, and a process for producing an olefin polymer using the prepolymerization catalyst component.

As a gas phase polymerization process of an olefin, a process in which a solid catalyst and an olefin are fed into a fluidized bed reactor to polymerize the olefin on the fluidized bed, and to thereby obtain a particle-like polymer has been conventionally employed. This process has been known to simplify the production process or to reduce the production cost in comparison with any liquid phase polymerization process because a polymer precipitation step and a polymer separation step following the polymerization can be omitted. As one component of the solid catalyst used in the gas phase polymerization process, a so-called prepolymerization catalyst component which is prepared by prepolymerization of an olefin in the presence of a solid catalyst component has been generally used. As the process for producing the prepolymerization catalyst component, for example, a process in which the prepolymerization catalyst component is obtained after subjecting ethylene and α-olefin to slurry polymerization using the solid catalyst component was proposed (e.g. JP 09221512 A or EP0723976 B1). However, when the gas phase polymerization of the olefin is conducted using the prepolymerization catalyst component as described above, bulk density of the resulting olefin polymer particles becomes low, as the case may be. Hence, in continuous polymerization, a large amount of olefin gas may be evacuated from the polymerization reactor together with the olefin polymer when the olefin polymer particles are removed from the polymerization reactor, and polymerization efficiency may be deteriorated because of shortened residence time of the catalyst in the polymerization reactor.

Under such circumstances, an object of the present invention is to provide a process for producing a prepolymerization catalyst component giving olefin polymer particles having a high bulk density, a prepolymerization catalyst component produced by the process, and a process for producing an olefin polymer using the prepolymerization catalyst component, for solving the problems as described above.

More specifically, the present invention relates to a process for producing a prepolymerization catalyst component which comprises contacting a co-catalyst support (A), a metallocene compound (B) and an organoaluminum compound (C) to obtain a contact-treated product, and prepolymerizing an olefin in the presence of the contact-treated product, wherein the process comprising the following steps (1), (2) and (3):
step (1): a step of subjecting a saturated aliphatic hydrocarbon compound solvent containing the metallocene compound (B) to a heat treatment at 40°C or higher;
step (2): a step of subjecting the heat treatment product obtained by the heat treatment in the step (1) to a contact treatment with the co-catalyst support (A); and
step (3): a step of subjecting the contact treatment product obtained by the contact treatment in the step (2) to a contact treatment with the organoaluminum compound (C).

According to the present invention, a process for producing a prepolymerization catalyst component to obtain olefin polymer particles having a high bulk density, a prepolymerization catalyst component obtainable by the process , and a process for producing an olefin polymer using the prepolymerization catalyst component can be provided.

The step (1) is a step of subjecting a saturated aliphatic hydrocarbon compound solvent containing the metallocene compound (B) to a heat treatment at 40°C or higher. The saturated aliphatic hydrocarbon compound solvent containing the metallocene compound (B) may be prepared by a process of charging the metallocene compound (B) into a saturated aliphatic hydrocarbon compound solvent, or the like. The metallocene compound (B) may be charged usually in the form of a powder, or a slurry in the saturated aliphatic hydrocarbon compound fluid.

Examples of the saturated aliphatic hydrocarbon compound used for the preparation of the saturated aliphatic hydrocarbon compound solvent containing the metallocene compound (B) include propane, n-butane, isobutane, n-pentane, isopentane, n-hexane, cyclohexane, heptane and the like. These may be used alone or in combination of two or more. The saturated aliphatic hydrocarbon compound is preferably one having a boiling point under normal pressure of 100°C or lower and more preferably 90°C or lower, and still more preferably propane, n-butane, isobutane, n-pentane, isopentane, n-hexane or cyclohexane.

In the heat treatment of the saturated aliphatic hydrocarbon compound solvent containing the metallocene compound (B), the temperature of the saturated aliphatic hydrocarbon compound solvent containing the metallocene compound (B) is regulated to be a temperature of 40°C or higher. Additionally, during the heat treatment, the solvent may be left to stand still, or may be stirred. The temperature is preferably 45°C or higher, and more preferably 50°C or higher in the light of elevation of the bulk density. Furthermore, the temperature is preferably 100°C or lower, and more preferably 80°C or lower in the light of enhancement of the catalyst activity. The time period of the heat treatment is usually 0.5 to 12 hours. The time period is preferably 1 hour or longer, and more preferably 2 hours or longer in the light of elevation of the bulk density. Furthermore, the time period is preferably 6 hours or shorter, and more preferably 4 hours or shorter in view of the stability of the catalytic performance.

The step (2) is a step of subjecting the heat treatment product obtained by the heat treatment in the step (1) (i.e., the saturated aliphatic hydrocarbon compound solvent containing the metallocene compound (B)) to a contact treatment with the co-catalyst support (A). Any contact treatment is acceptable as long as the heat treatment product is allowed to contact with the co-catalyst support (A), and generally, a process in which the co-catalyst support (A) is charged into the heat treatment product, or a process in which the heat treatment product and the co-catalyst support (A) are charged into the saturated aliphatic hydrocarbon compound can be employed. Moreover, the co-catalyst support (A) is usually charged in the form of a powder, or slurry in the saturated aliphatic hydrocarbon compound solvent.

The temperature of the contact treatment in the step (2) is preferably 70°C or lower, more preferably 60°C or lower, still more preferably 45°C or lower, and particularly preferably 40°C or lower, in the light of increase of the bulk density. Also, in the light of increase of the bulk density, the temperature is preferably 10°C or higher, and more preferably 20°C or higher. The time period of the contact treatment may be usually 0.1 hours to 2 hours.

The step (3) is a step of subjecting the contact treatment product obtained by the contact treatment in the step (2) (i.e., the contact treatment product of the co-catalyst support (A) with the heat treatment product obtained by the heat treatment in the step (1)) to a contact treatment with the organoaluminum compound (C). Any contact treatment is acceptable as long as the contact treatment product obtained by the contact treatment in the step (2) is allowed to contact with the organoaluminum compound (C), and generally, a process in which the organoaluminum compound (C) is charged into the contact treatment product obtained by the contact treatment in the step (2), or a process in which the contact treatment product obtained by the contact treatment in the step (2) and the organoaluminum compound (C) are charged into the saturated aliphatic hydrocarbon compound can be employed.

The temperature of the contact treatment in the step (3) is preferably 70°C or lower, more preferably 60°C or lower, still more preferably 45°C or lower, and particularly preferably 40°C or lower, in the light of increase of the bulk density. Also, in the light of efficient generation of the prepolymerization activity, the temperature is preferably 10°C or higher, and more preferably 20°C or higher. Further, the time period of the contact treatment may be usually 0.01 hours to 0.5 hours.

The contact treatment in the step (3) is preferably carried out in the presence of an olefin. The olefin for use in this step may be usually the olefin to be a source in the prepolymerization. An amount of the olefin is preferably 0.05 to 1 g per 1 g of the co-catalyst support (A).

With respect to the aforementioned steps (1) to (3), all of these steps may be carried out in the prepolymerization reactor by separately charging the saturated aliphatic hydrocarbon compound the co-catalyst support (A), the metallocene compound (B) and the organoaluminum compound (C) to the prepolymerization reactor; alternatively, the steps (2) and (3) may be carried out in the prepolymerization reactor, or the step (3) may be carried out in the prepolymerization reactor.

The prepolymerization referred to herein means to prepolymerize an olefin (polymerizing a small amount of the olefin) in the presence of the contact-treated product of the co-catalyst support (A), the metallocene compound (B) and the organoaluminum compound(C) obtained by the treatment step having the aforementioned steps (1), (2) and (3). The prepolymerization is usually conducted by a slurry polymerization process, and any of batch-wise, semibatch-wise, or continuous manners may be employed for the prepolymerization. Moreover, the prepolymerization may be conducted after adding a chain transfer agent such as hydrogen.

When the prepolymerization is conducted by the slurry polymerization process, a saturated aliphatic hydrocarbon compound is usually used as a solvent, and examples thereof include propane, n-butane, isobutane, n-pentane, isopentane, n-hexane, cyclohexane, heptane and the like. These may be used alone or in combination of two ore more. The saturated aliphatic hydrocarbon compound is preferably one having a boiling point under normal pressure of 100°C or lower; more preferably one having a boiling point under normal pressure of 90°C or lower; and still more preferably propane, n-butane, isobutane, n-pentane, isopentane, n-hexane or cyclohexane.

When the prepolymerization is conducted by the slurry polymerization process, with regard to the slurry concentration, an amount of the co-catalyst support (A) per liter of the solvent may be usually 0.1 to 600 g, and preferably 0.5 to 300 g. The prepolymerization temperature is usually -20 to 100°C, and preferably 0 to 80°C. Though the prepolymerization temperature can be properly altered during the polymerization, the temperature in initiating the prepolymerization is preferably 45°C or lower, and more preferably 40°C or lower. In addition, partial pressure of the olefins in the gas phase part during the prepolymerization is usually 0.001 to 2 MPa, and preferably 0.01 to 1 MPa. The prepolymerization time period is usually 2 minutes to 15 hours.

Examples of the olefin for use in the prepolymerization include ethylene, propylene, 1-butene, 1-pentene, 1-hexene, 1-octene, 4-methyl-1-pentene, cyclopentene, cyclohexene and the like. These may be used alone, or two or more thereof may be used in combination. Preferably, ethylene alone, or ethylene in combination with α-olefin is used. More preferably, ethylene alone, or at least one α-olefin selected from 1-butene, 1-hexene and 1-octene is used in combination with ethylene.

The content of the prepolymerized polymer in the prepolymerization catalyst component may be usually 0.01 to 1000 g, preferably 0.05 to 500 g, and more preferably 0.1 to 200 g per gram of the co-catalyst support (A).

The molecular weight distribution (Mw/Mn) of the polymer generated by the prepolymerization is preferably 3 to 20. The molecular weight distribution (Mw/Mn) is a value obtained by determining weight average molecular weight (Mw) and number average molecular weight (Mn) in terms of polystyrene used in measurement of gel permeation chromatography and dividing the Mw by the Mn (Mw/Mn).

The co-catalyst support (A) can be prepared by supporting a compound that forms an ionic complex through ionization of the metallocene compound (B) (for example, an organoaluminum oxy compound, a boron compound, an organozinc compound or the like) on a particle-like support. Examples of the co-catalyst support (A) include particles disclosed in JP2003-171412 A and JP2005-68170 A. Preferably, the co-catalyst support (A) is prepared by supporting the boron compound or organozinc compound on the particle-like support.

Examples of the boron compound include tris(pentafluorophenyl)borane, triphenylcarbenium tetrakis (pentafluorophenyl) borate, tri(n-butyl) ammonium tetrakis(pentafluorophenyl)borate and N,N-dimethylanilinium tetrakis(pentafluorophenyl)borate.

The zinc compound includes a contact-treated product obtained by subjecting diethyl zinc, a fluorinated phenol and water to contact treatment, and the like.

As a co-catalyst support (A), solid catalyst components disclosed in JP2003-171412 A and JP 2005-68170 A, i.e., the solid catalyst component obtained by contacting the following components (a), (b), (c) and (d) can be preferably employed:
(a) a compound represented by the general formula [1]:

   M¹L¹ₘ [1],
(b) a compound represented by the general formula [2]:

   R¹ₜ₋₁TH [2],
(c) a compound represented by the general formula [3]:

   R²ₜ₋₂TH₂ [3],

   and
(d) a particle-like support,
wherein M¹ represents a metal atom of Group 1, 2, 12, 14 or 15 of the Periodic Table (M¹ is preferably zinc) and m represents a number corresponding to the atomic valence of M¹, respectively; L¹ represents a hydrogen atom, a halogen atom or a hydrocarbon group (L¹ is preferably a hydrocarbon, e.g. an alkyl group, with 1 to 10 carbon atoms) and when there exist more than one L¹, they may be the same or different with each other; R¹ represents a group having an electron withdrawing, group, or an electron-withdrawing group and when there exist more than one R¹, they may be the same or different with each other (R¹ is preferably a phenyl group having one or more electron withdrawing groups such as halogen (e.g. fluorine)); R² represents a hydrocarbon group or a halogenated (e.g. fluorinated) hydrocarbon group (the hydrocarbon group can have 1 to 10 carbon atoms); T each independently represents a non-metal atom of Group 15 of 16 (preferably Group 15) of the Periodic Table (T is preferably nitrogen or oxygen, more preferably nitrogen); and t represents a number corresponding to the atomic valence of T of each compound.

Examples of the component (a) include dimethyl zinc, diethyl zinc, dipropyl zinc, di-n-butyl zinc, diisobutyl zinc, di-n-hexyl zinc and the like. The component (a) is preferably dimethyl zinc or diethyl zinc.

Examples of the component (b) include fluorinated phenol such as pentafluorophenol, 3,5-difluorophenol, 3,4,5-trifluorophenol and 2,4,6-trifluorophenol.

Examples of the component (c) include water, trifluoromethylamine, perfluorobutylamine, perfluorooctylamine, perfluoropentadecylamine, 2-fluoroaniline, 3-fluoroaniline, 4-fluoroaniline, 2,6-difluoroaniline, 3,5-difluoroaniline, 2,4,6-trifluoroaniline, pentafluoroaniline, 2-(trifluoromethyl)aniline, 3-(trifluoromethyl)aniline, 4-(trifluoromethyl)aniline, 2,6-bis(trifluoromethyl)aniline, 3,5-bis(trifluoromethyl)aniline, 2,4,6-tris(trifluoromethyl)aniline and the like. The component (c) is preferably water or pentafluoroaniline.

The component (d) is preferably a porous substance. Examples of the component (d) which may be used include inorganic oxide such as SiO₂, Al₂O₃, MgO, ZrO₂, TiO₂, B₂O₃, CaO, ZnO, BaO and ThO₂; clay and clay minerals such as smectite, montmorillonite, hectorite, laponite and saponite; and organic polymers such as polyethylene, polypropylene and styrene-divinylbenzene copolymers.

A weight average particle diameter of the co-catalyst support (A) is usually 10 to 100 µm, preferably 20 to 80 µm, and more preferably 30 to 60 µm.

The metallocene compound (B) is preferably a transition metal compound represented by the following general formula [4]:

L²ₐM²X¹_{b} [4],

or a dimer of the µ-oxo type transition metal compound thereof.

Wherein, M² represents a transition metal atom in any of Groups 3 to 11 of the Periodic Table or a transition metal atom in lanthanide series, L² represents a group having a cyclopentadiene type anion skeleton; more than one L² may be directly bonded with each other, or may be bonded through a residue containing a carbon atom, a silicon atom, a nitrogen atom, an oxygen atom, a sulfur atom or a phosphorus atom, X¹ represents a halogen atom, a hydrocarbon group (provided, however, that a group having a cyclopentadiene type anion skeleton is excluded), or a hydrocarbonoxy group, and the symbol "a" represents a number that satisfies the formula of 0 < a ≤ 8, and "b" represents a number that satisfies the formula of 0 < b ≤ 8.

In the general formula [4], M² represents a transition metal atom in any of Groups 3 to 11 of the Periodic Table (IUPAC 1989) or a transition metal atom in lanthanide series. Specific examples thereof include a scandium atom, an yttrium atom, a titanium atom, a zirconium atom, a hafnium atom, a vanadium atom, a niobium atom, a tantalum atom, a chromium atom, an iron atom, a ruthenium atom, a cobalt atom, a rhodium atom, a nickel atom, a palladium atom, a samarium atom, an ytterbium atom and the like. M² in the general formula [4] is preferably a titanium atom, a zirconium atom, a hafnium atom, a vanadium atom, a chromium atom, an iron atom, a cobalt atom or a nickel atom, particularly preferably a titanium atom, a zirconium atom or a hafnium atom, and most preferably a zirconium atom.

In the general formula [4], L² represents a group having a cyclopentadiene type anion skeleton; and more than one L² may be the same or different. Furthermore, more than one L² may be directly bonded with each other, or may be bonded through a bridging group containing a carbon atom, a silicon atom, a nitrogen atom, an oxygen atom, a sulfur atom or a phosphorus atom.

Examples of the group having a cyclopentadiene type anion skeleton in L² include η⁵-(substituted)cyclopentadienyl groups, η⁵-(substituted)indenyl groups, η⁵-(substituted)fluorenyl groups and the like. Specifically, illustrative examples thereof include a η⁵-cyclopentadienyl group, a η⁵-methylcyclopentadienyl group, a η⁵-ethylcyclopentadienyl group, a η⁵-n-butylcyclopentadienyl group, a η⁵-tert-butylcyclopentadienyl group, a η⁵-1,2-dimethylcyclopentadienyl group, a η⁵-1,3-dimethylcyclopentadienyl group, a η⁵-1-methyl-2-ethylcyclopentadienyl group, a η⁵-1-methyl-3-ethylcyclopentadienyl group, a η⁵-1-tert-butyl-2-methylcyclopentadienyl group, a η⁵-1-tert-butyl-3-methylcyclopentadienyl group, a η⁵-1-methyl-2-isopropylcyclopentadienyl group, a η⁵-1-methyl-3-isopropylcyclopentadienyl group, a η⁵-1-methyl-2-n-butylcyclopentadienyl group, a η⁵-1-methyl-3-n-butylcyclopentadienyl group, a η⁵-1,2,3-trimethylcyclopentadienyl group, a η⁵-1,2,4-trimethylcyclopentadienyl group, a η⁵-tetramethylcyclopentadienyl group, a η⁵-pentamethylcyclopentadienyl group, a η⁵-indenyl group, a η⁵-4,5,6,7-tetrahydroindenyl group, a η⁵-2-methylindenyl group, a η⁵-3-methylindenyl group, a η⁵-4-methylindenyl group, a η⁵-5-methylindenyl group, a η⁵-6-methylindenyl group, a η⁵-7-methylindenyl group, a η⁵-2-tert-butylindenyl group, a η⁵-3-tert-butylindenyl group, a η⁵-4-tert-butylindenyl group, a η⁵-5-tert-butylindenyl group, a η⁵-6-tert-butylindenyl group, a η⁵-7-tert-butylindenyl group, a η⁵-2,3-dimethylindenyl group, a η⁵-4,7-dimethylindenyl group, a η⁵-2,4,7-trimethylindenyl group, a η⁵-2-methyl-4-isopropylindenyl group, a η⁵-4,5-benzindenyl group, a η⁵-2-methyl-4,5-benzindenyl group, a η⁵-4-phenylindenyl group, a η⁵-2-methyl-5-phenylindenyl group, a η⁵-2-methyl-4-phenylindenyl group, a η⁵-2-methyl-4-naphthylindenyl group, a η⁵-fluorenyl group, a η⁵-2,7-dimethylfluorenyl group, a η⁵-2,7-di-tert-butylfluorenyl group, and substitutes of the same, and the like. Herein, "η⁵-" may be omitted in referring to the name of the transition metal compound.

The groups having the cyclopentadiene type anion skeleton may be directly bonded to each other, or may be bonded through a bridging group containing a carbon atom, a silicon atom, a nitrogen atom, an oxygen atom, a sulfur atom or a phosphorus atom. Examples of such a bridging group include alkylene groups such as an ethylene group and a propylene group; substituted alkylene groups such as a dimethylmethylene group and a diphenylmethylene group; substituted or non-substituted silylene groups such as a silylene group, a dimethylsilylene group, a diphenylsilylene group and a tetramethyldisilylene group; and hetero atoms such as a nitrogen atom, an oxygen atom, a sulfur atom and a phosphorus atom.

X¹ in the general formula [4] may be a halogen atom, a hydrocarbon group (provided, however, that the group having a cyclopentadiene type anion skeleton is excluded), or a hydrocarbonoxy group. Specific examples of the halogen atom include a fluorine atom, a chlorine atom, a bromine atom and an iodine atom. The hydrocarbon group referred to herein does not include a group having a cyclopentadiene type anion skeleton. The hydrocarbon group can e.g. contain 1 to 20 carbon atoms. Examples of the hydrocarbon group referred to herein include alkyl groups, aralkyl groups, aryl groups, alkenyl groups and the like; while examples of the hydrocarbonoxy group include alkoxy groups, aralkyloxy groups, aryloxy groups and the like.

Examples of the alkyl group include a methyl group, an ethyl group, a n-propyl group, an isopropyl group, a n-butyl group, a sec-butyl group, a tert-butyl group, an isobutyl group, a n-pentyl group, a neopentyl group, an amyl group, a n-hexyl group, a n-octyl group, a n-decyl group, a n-dodecyl group, a n-pentadecyl group, a n-eicosyl group and the like. Any one of these alkyl groups may be substituted with a halogen atom such as a fluorine atom, a chlorine atom, a bromine atom or an iodine atom. Examples of the alkyl group substituted with the halogen atom include a fluoromethyl group, a trifluoromethyl group, a chloromethyl group, a trichloromethyl group, a fluoroethyl group, a pentafluoroethyl group, a perfluoropropyl group, a perfluorobutyl group, a perfluorohexyl group, a perfluorooctyl group, a perchloropropyl group, a perchlorobutyl group, a perbromopropyl group and the like. Moreover, any one of these alkyl groups may be substituted in part with: an alkoxy group such as a methoxy group or an ethoxy group; an aryloxy group such as a phenoxy group, or an aralkyloxy group such as a benzyloxy group, or the like.

Examples the aralkyl group include a benzyl group, a (2-methylphenyl)methyl group, a (3-methylphenyl)methyl group, a (4-methylphenyl)methyl group, a (2,3-dimethylphenyl)methyl group, a (2,4-dimethylphenyl)methyl group, a (2,5-dimethylphenyl)methyl group, a (2,6-dimethylphenyl)methyl group, a (3,4-dimethylphenyl)methyl group, a (3,5-dimethylphenyl)methyl group, a (2,3,4-trimethylphenyl)methyl group, a (2,3,5-trimethylphenyl)methyl group, a (2,3,6-trimethylphenyl)methyl group, a (3,4,5-trimethylphenyl)methyl group, a (2,4,6-trimethylphenyl)methyl group, a (2,3,4,5-tetramethylphenyl)methyl group, a (2,3,4,6-tetramethylphenyl)methyl group, a (2,3,5,6-tetramethylphenyl)methyl group, a (pentamethylphenyl)methyl group, an (ethylphenyl)methyl group, a (n-propylphenyl)methyl group, an (isopropylphenyl)methyl group, a (n-butylphenyl)methyl group, a (sec-butylphenyl)methyl group, a (tert-butylphenyl)methyl group, a (n-pentylphenyl)methyl group, a (neopentylphenyl)methyl group, a (n-hexylphenyl)methyl group, a (n-octylphenyl)methyl group, a (n-decylphenyl)methyl group, a (n-dodecylphenyl)methyl group, a naphthylmethyl group, an anthracenylmethyl group and the like. Any one of these aralkyl groups may be substituted in part with a halogen atom such as a fluorine atom, a chlorine atom, a bromine atom or an iodine atom; an alkoxy group such as a methoxy group or an ethoxy group; an aryloxy group such as a phenoxy group; or an aralkyloxy group such as a benzyloxy group, or the like.

Examples of the aryl group include a phenyl group, a 2-tolyl group, a 3-tolyl group, a 4-tolyl group, a 2,3-xylyl group, a 2,4-xylyl group, a 2,5-xylyl group, a 2,6-xylyl group, a 3,4-xylyl group, a 3,5-xylyl group, a 2,3,4-trimethylphenyl group, a 2,3,5-trimethylphenyl group, a 2,3,6-trimethylphenyl group, a 2,4,6-trimethylphenyl group, a 3,4,5-trimethylphenyl group, a 2,3,4,5-tetramethylphenyl group, a 2,3,4,6-tetramethylphenyl group, a 2,3,5,6-tetramethylphenyl group, a pentamethylphenyl group, an ethylphenyl group, a n-propylphenyl group, an isopropylphenyl group, a n-butylphenyl group, a sec-butylphenyl group, a tert-butylphenyl group, a n-pentylphenyl group, a neopentylphenyl group, a n-hexylphenyl group, a n-octylphenyl group, a n-decylphenyl group, a n-dodecylphenyl group, a n-tetradecylphenyl group, a naphthyl group, an anthracenyl and the like. Any one of these aryl groups may be substituted in part with a halogen atom such as a fluorine atom, a chlorine atom, a bromine atom or an iodine atom; an alkoxy group such as a methoxy group or an ethoxy group; an aryloxy group such as a phenoxy group; or an aralkyloxy group such as a benzyloxy group, or the like.

Examples of the alkenyl group include an allyl group, a methallyl group, a crotyl group, a 1,3-diphenyl-2-propenyl group and the like.

Examples of the alkoxy group include a methoxy group, an ethoxy group, a n-propoxy group, an isopropoxy group, a n-butoxy group, a sec-butoxy group, a tert-butoxy group, a n-pentoxy group, a neopentoxy group, a n-hexoxy group, a n-octoxy group, a n-dodecoxy group, a n-pentadecoxy group, a n-icosoxy group and the like. Any one of these alkoxy groups may be substituted in part with a halogen atom such as a fluorine atom, a chlorine atom, a bromine atom, an iodine atom, an alkoxy group such as a methoxy group and an ethoxy group, an aryloxy group such as a phenoxy group and an aralkyloxy group such as a benzyloxy group.

Examples of the aralkyloxy group include a benzyloxy group, a (2-methylphenyl)methoxy group, a (3-methylphenyl)methoxy group, a (4-methylphenyl)methoxy group, a (2,3-dimethylphenyl)methoxy group, a (2,4-dimethylphenyl)methoxy group, a (2,5-dimethylphenyl)methoxy group, a (2,6-dimethylphenyl)methoxy group, a (3,4-dimethylphenyl)methoxy group, a (3,5-dimethylphenyl)methoxy group, a (2,3,4-trimethylphenyl)methoxy group, a (2,3,5-trimethylphenyl)methoxy group, a (2,3,6-trimethylphenyl)methoxy group, a (2,4,5-trimethylphenyl)methoxy group, a (2,4,6-trimethylphenyl)methoxy group, a (3,4,5-trimethylphenyl)methoxy group, a (2,3,4,5-tetramethylphenyl)methoxy group, a (2,3,4,6-tetramethylphenyl)methoxy group, a (2,3,5,6-tetramethylphenyl)methoxy group, a (pentamethylphenyl)methoxy group, an (ethylphenyl)methoxy group, a (n-propylphenyl)methoxy group, an (isopropylphenyl)methoxy group, a (n-butylphenyl)methoxy group, a (sec-butylphenyl)methoxy group, a (tert-butylphenyl)methoxy group, a (n-hexylphenyl)methoxy group, a (n-octylphenyl)methoxy group, a (n-decylphenyl)methoxy group, a naphthylmethoxy group, an anthracenylmethoxy group and the like. Any one of these aralkyloxy groups may be substituted in part with a fluorine atom, a chlorine atom, a bromine atom, an iodine atom, an alkoxy group such as a methoxy group and an ethoxy group, an aryloxy group such as a phenoxy group and an aralkyloxy group such as a benzyloxy group.

Examples of the aryloxy group include a phenoxy group, a 2-methylphenoxy group, a 3-methylphenoxy group, a 4-methylphenoxy group, a 2,3-dimethylphenoxy group, a 2,4-dimethylphenoxy group, a 2,5-dimethylphenoxy group, a 2,6-dimethylphenoxy group, a 3,4-dimethylphenoxy group, a 3,5-dimethylphenoxy group, a 2-tert-butyl-3-methylphenoxy group, a 2-tert-butyl-4-methylphenoxy group, a 2-tert-butyl-5-methylphenoxy group, a 2-tert-butyl-6-methylphenoxy group, a 2,3,4-trimethylphenoxy group, a 2,3,5-trimethylphenoxy group, a 2,3,6-trimethylphenoxy group, a 2,4,5-trimethylphenoxy group, a 2,4,6-trimethylphenoxy group, a 2-tert-butyl-3,4-dimethylphenoxy group, a 2-tert-butyl-3,5-dimethylphenoxy group, a 2-tert-butyl-3,6-dimethylphenoxy group, a 2,6-di-tert-butyl-3-methylphenoxy group, a 2-tert-butyl-4,5-dimethylphenoxy group, a 2,6-di-tert-butyl-4-methylphenoxy group, a 3,4,5-trimethylphenoxy group, a 2,3,4,5-tetramethylphenoxy group, a 2-tert-butyl-3,4,5-trimethylphenoxy group, a 2,3,4,6-tetramethylphenoxy group, a 2-tert-butyl-3,4,6-trimethylphenoxy group, a 2,6-di-tert-butyl-3,4-dimethylphenoxy group, a 2,3,5,6-tetramethylphenoxy group, a 2-tert-butyl-3,5,6-trimethylphenoxy group, a 2,6-di-tert-butyl-3,5-dimethylphenoxy group, a pentamethylphenoxv group, an ethylphenoxy group, a n-propylphenoxy group, an isopropylphenoxy group, a n-butylphenoxy group, a sec-butylphenoxy group, a tert-butylphenoxy group, a n-hexylphenoxy group, a n-octylphenoxy group, a n-decylphenoxy group, a n-tetradecylphenoxy group, a naphthoxy group, an anthracenoxy group and the like. Any one of these aryloxy groups may be substituted in part with a halogen atom such as a fluorine atom, a chlorine atom, a bromine atom or an iodine atom; an alkoxy group such as a methoxy group or an ethoxy group; or an aralkyloxy group such as a benzyloxy group, or the like.

The symbol "a" in the general formula [4] represents a number that satisfies the formula of 0<a≤8, and "b" represents a number that satisfies the formula of 0<b≤8, which may be preferably selected depending on the valency of M². When M² is a titanium atom, a zirconium atom or a hafnium atom, "a" is preferably 2, and also "b" is preferably 2.

Specific examples of the metallocene compound which may be illustrated include bis(cyclopentadienyl)titanium dichloride, bis (methylcyclopentadienyl)titanium dichloride, bis(ethylcyclopentadienyl)titanium dichloride, bis(n-butylcyclopentadienyl)titanium dichloride, bis(tert-butylcyclopentadienyl)titanium dichloride, bis(1,2-dimethylcyclopentadienyl)titanium dichloride, bis(1,3-dimethylcyclopentadienyl)titanium dichloride, bis(1-methyl-2-ethylcyclopentadienyl)titanium dichloride, bis(1-methyl-3-ethylcyclopentadienyl)titanium dichloride, bis(1-methyl-2-n-butylcyclopentadienyl)titanium dichloride, bis(1-methyl-3-n-butylcyclopentadienyl)titanium dichloride, bis(1-methyl-2-isopropylcyclopentadienyl)titanium dichloride, bis(1-methyl-3-isopropylcyclopentadienyl)titanium dichloride, bis(1-tert-butyl-2-methylcyclopentadienyl)titanium dichloride, bis(1-tert-butyl-3-methylcyclopentadienyl)titanium dichloride, bis(1,2,3-trimethylcyclopentadienyl)titanium dichloride, bis(1,2,4-trimethylcyclopentadienyl)titanium dichloride, bis(tetramethylcyclopentadienyl)titanium dichloride, bis(pentamethylcyclopentadienyl)titanium dichloride, bis(indenyl)titanium dichloride, bis(4,5,6,7-tetrahydroindenyl)titanium dichloride, bis(fluorenyl)titanium dichloride, bis(2-phenylindenyl)titanium dichloride,
bis[2-(bis-3,5-trifluoromethylphenyl)indenyl]titanium dichloride, bis[2-(4-tert-butylphenyl)indenyl]titanium dichloride, bis[2-(4-trifluoromethylphenyl)indenyl]titanium dichloride, bis[2-(4-methylphenyl)indenyl]titanium dichloride, bis[2-(3,5-dimethylphenyl)indenyl]titanium dichloride, bis[2-(pentafluorophenyl)indenyl]titanium dichloride, cyclopentadienyl(pentamethylcyclopentadienyl)titanium dichloride, cyclopentadienyl(indenyl)titanium dichloride, cyclopentadienyl(fluorenyl)titanium dichloride, indenyl(fluorenyl)titanium dichloride, pentamethylcyclopentadienyl(indenyl)titanium dichloride, pentamethylcyclopentadienyl(fluorenyl)titanium dichloride, cyclopentadieriyl(2-phenylindenyl)titanium dichloride, pentamethylcyclopentadienyl(2-phenylindenyl)titanium dichloride,
dimethylsilylenebis(cyclopentadienyl)titanium dichloride, dimethylsilylenebis(2-methylcyclopentadienyl)titanium dichloride, dimethylsilylenebis(3-methylcyclopentadienyl)titanium dichloride, dimethylsilylenebis(2-n-butylcyclopentadienyl)titanium dichloride, dimethylsilylenebis(3-n-butylcyclopentadienyl)titanium dichloride, dimethylsilylenebis(2,3-dimethylcyclopentadienyl)titanium dichloride, dimethylsilylenebis(2,4-dimethylcyclopentadienyl)titanium dichloride, dimethylsilylenebis(2,5-dimethylcyclopentadienyl)titanium dichloride, dimethylsilylenebis(3,4-dimethylcyclopentadienyl)titanium dichloride, dimethylsilylenebis(2,3-ethylmethylcyclopentadienyl)titanium dichloride, dimethylsilylenebis(2,4-ethylmethylcyclopentadienyl)titanium dichloride, dimethylsilylenebis(2,5-ethylmethylcyclopentadienyl)titanium dichloride, dimethylsilylenebis(3,5-ethylmethylcyclopentadienyl)titanium dichloride, dimethylsilylenebis(2,3,4-trimethylcyclopentadienyl)titanium dichloride, dimethylsilylenebis(2,3,5-trimethylcyclopentadienyl)titanium dichloride, dimethylsilylenebis(tetramethylcyclopentadienyl)titanium dichloride,
dimethylsilylenebis(indenyl)titanium dichloride, dimethylsilylenebis(2-methylindenyl)titanium dichloride, dimethylsilylenebis(2-tert-butylindenyl)titanium dichloride, dimethylsilylenebis(2,3-dimethylindenyl)titanium dichloride, dimethylsilylenebis(2,4,7-trimethylindenyl)titanium dichloride, dimethylsilylenebis(2-methyl-4-isopropylindenyl)titanium dichloride, dimethylsilylenebis(4,5-benzindenyl)titanium dichloride, dimethylsilylenebis(2-methyl-4,5-benzindenyl)titanium dichloride, dimethylsilylenebis(2-phenylindenyl)titanium dichloride, dimethylsilylenebis(4-phenylindenyl)titanium dichloride, dimethylsilylenebis(2-methyl-4-phenylindenyl)titanium dichloride, dimethylsilylenebis(2-methyl-5-phenylindenyl)titanium dichloride, dimethylsilylenebis(2-methyl-4-naphthylindenyl)titanium dichloride, dimethylsilylenebis(4,5,6,7-tetrahydroindenyl)titanium dichloride,
dimethylsilylene(cyclopentadienyl)(indenyl)titanium dichloride, dimethylsilylene(methylcyclopentadienyl)(indenyl)titanium dichloride, dimethylsilylene(n-butylcyclopentadienyl)(indenyl)titanium dichloride, dimethylsilylene(tetramethylcyclopentadienyl)(indenyl)titan ium dichloride, dimethylsilylene(cyclopentadienyl)(fluorenyl)titanium dichloride, dimethylsilylene(methylcyclopentadienyl)(fluorenyl)titanium dichloride, dimethylsilylene(n-butylcyclopentadienyl)(fluorenyl)titanium dichloride, dimethylsilylene(tetramethylcyclopentadienyl)(indenyl)titan ium dichloride, dimethylsilylene(indenyl)(fluorenyl)titanium dichloride, dimethylsilylenebis(fluorenyl)titanium dichloride, dimethylsilylene(cyclopentadienyl)(tetramethylcyclopentadie nyl)titanium dichloride, dimethylsilylene(tetramethylcyclopentadienyl)(fluorenyl)tit anium dichloride,
cyclopentadienyltitanium trichloride, pentamethylcyclopentadienyltitanium trichloride, cyclopentadienyl(dimethylamide)titanium dichloride, cyclopentadienyl(phenoxy)titanium dichloride, cyclopentadienyl(2,6-dimethylphenyl)titanium dichloride, cyclopentadienyl(2,6-diisopropylphenyl)titanium dichloride, cyclopentadienyl(2,6-di-tert-butylphenyl)titanium dichloride, pentamethylcyclopentadienyl(2,6-dimethylphenyl)titanium dichloride, pentamethylcyclopentadienyl(2,6-diisopropylphenyl)titanium dichloride, pentamethylcyclopentadienyl(2,6-tert-butylphenyl)titanium dichloride, indenyl(2,6-diisopropylphenyl)titanium dichloride, fluorenyl(2,6-diisopropylphenyl)titanium dichloride,
dimethylsilylene(cyclopentadienyl)(2-phenoxy)titanium dichloride, dimethylsilylene(cyclopentadienyl)(3-methyl-2-phenoxy)titanium dichloride, dimethylsilylene(cyclopentadienyl)(3,5-dimethyl-2-phenoxy)titanium dichloride, dimethylsilylene(cyclopentadienyl)(3-tert-butyl-2-phenoxy)titanium dichloride, dimethylsilylene(cyclopentadienyl)(3-tert-butyl-5-methyl-2-phenoxy)titanium dichloride, dimethylsilylene(cyclopentadienyl)(3,5-di-tert-butyl-2-phenoxy)titanium dichloride, dimethylsilylene(cyclopentadienyl)(5-methyl-3-phenyl-2-phenoxy)titanium dichloride, dimethylsilylene(cyclopentadienyl)(3-tertbutyldimethylsilyl-5-methyl-2-phenoxy)titanium dichloride, dimethylsilylene(cyclopentadienyl)(5-methyl-3-trimethylsilyl-2-phenoxy)titanium dichloride, dimethylsilylene(cyclopentadienyl)(3-tert-butyl-5-methoxy-2-phenoxy)titanium dichloride, dimethylsilylene(cyclopentadienyl)(3-tert-butyl-5-chloro-2-phenoxy)titanium dichloride, dimethylsilylene(cyclopentadienyl)(3,5-diamyl-2-phenoxy)titanium dichloride, dimethylsilylene(cyclopentadienyl)(3-phenyl-2-phenoxy)titanium dichloride, dimethylsilylene(cyclopentadienyl)(1-naphthoxy-2-yl)titanium dichloride,
dimethylsilylene(methylcyclopentadienyl)(2-phenoxy)titanium dichloride, dimethylsilylene(methylcyclopentadienyl)(3-methyl-2-phenoxy)titanium dichloride, dimethylsilylene(methylcyclopentadienyl)(3,5-dimethyl-2-phenoxy)titanium dichloride, dimethylsilylene(methylcyclopentadienyl)(3-tert-butyl-2-phenoxy)titanium dichloride, dimethylsilylene(methylcyclopentadienyl)(3-tert-butyl-5-methyl-2-phenoxy)titanium dichloride, dimethylsilylene(methylcyclopentadienyl)(3,5-di-tert-butyl-2-phenoxy)titanium dichloride, dimethylsilylene(methylcyclopentadienyl)(5-methyl-3-phenyl-2-phenoxy)titanium dichloride, dimethylsilylene(methylcyclopentadienyl)(3-tertbutyldimethylsilyl-5-methyl-2-phenoxy)titanium dichloride, dimethylsilylene(methylcyclopentadienyl)(5-methyl-3-trimethylsilyl-2-phenoxy)titanium dichloride, dimethylsilylene(methylcyclopentadienyl)(3-tert-butyl-5-methoxy-2-phenoxy)titanium dichloride, dimethylsilylene(methylcyclopentadienyl)(3-tert-butyl-5-chloro-2-phenoxy)titanium dichloride, dimethylsilylene(methylcyclopentadienyl)(3,5-diamyl-2-phenoxy)titanium dichloride, dimethylsilylene(methylcyclopentadienyl)(3-phenyl-2-phenoxy)titanium dichloride, dimethylsilylene(methylcyclopentadienyl)(1-naphthoxy-2-yl)titanium dichloride,
dimethylsilylene(n-butylcyclopentadienyl)(2-phenoxy)titanium dichloride, dimethylsilylene(n-butylcyclopentadienyl)(3-methyl-2-phenoxy)titanium dichloride, dimethylsilylene(n-butylcyclopentadienyl)(3,5-dimethyl-2-phenoxy)titanium dichloride, dimethylsilylene(n-butylcyclopentadienyl)(3-tert-butyl-2-phenoxy)titanium dichloride, dimethylsilylene(n-butylcyclopentadienyl)(3-tert-butyl-5-methyl-2-phenoxy)titanium dichloride, dimethylsilylene(n-butylcyclopentadienyl)(3,5-di-tert-butyl-2-phenoxy)titanium dichloride, dimethylsilylene(n-butylcyclopentadienyl)(5-methyl-3-phenyl-2-phenoxy)titanium dichloride, dimethylsilylene(n-butylcyclopentadienyl)(3-tert-butyldimethylsilyl-5-methyl-2-phenoxy)titanium dichloride, dimethylsilylene(n-butylcyclopentadienyl)(5-methyl-3-trimethylsilyl-2-phenoxy)titanium dichloride, dimethylsilylene(n-butylcyclopentadienyl)(3-tert-butyl-5-methoxy-2-phenoxy)titanium dichloride, dimethylsilylene(n-butylcyclopentadienyl)(3-tert-butyl-5-chloro-2-phenoxy)titanium dichloride, dimethylsilylene(n-butylcyclopentadienyl)(3,5-diamyl-2-phenoxy)titanium dichloride, dimethylsilylene(n-butylcyclopentadienyl)(3-phenyl-2-phenoxy)titanium dichloride, dimethylsilylene(n-butylcyclopentadienyl)(1-naphthoxy-2-yl)titanium dichloride,
dimethylsilylene(tert-butylcyclopentadienyl)(2-phenoxy)titanium dichloride, dimethylsilylene(tert-butylcyclopentadienyl)(3-methyl-2-phenoxy)titanium dichloride, dimethylsilylene(tert-butylcyclopentadienyl)(3,5-dimethyl-2-phenoxy)titanium dichloride, dimethy]silylene(tert-butylcyclopentadienyl) (3-tert-butyl-2-phenoxy)titanium dichloride, dimethylsilylene(tert-butylcyclopentadienyl)(3-tert-butyl-5-methyl-2-phenoxy)titanium dichloride, dimethylsilylene(tert-butylcyclopentadienyl)(3,5-di-tert-butyl-2-phenoxy)titanium dichloride, dimethylsilylene(tert-butylcyclopentadienyl)(5-methyl-3-phenyl-2-phenoxy)titanium dichloride, dimethylsilylene(tert-butylcyclopentadienyl)(3-tert-butyldimethylsilyl-5-methyl-2-phenoxy)titanium dichloride, dimethylsilylene(tert-butylcyclopentadienyl)(5-methyl-3-trimethylsilyl-2-phenoxy)titanium dichloride, dimethylsilylene(tert-butylcyclopentadienyl)(3-tert-butyl-5-methoxy-2-phenoxy)titanium dichloride, dimethylsilylene(tert-butylcyclopentadienyl)(3-tert-butyl-5-chloro-2-phenoxy)titanium dichloride, dimethylsilylene(tert-butylcyclopentadienyl)(3,5-diamyl-2-phenoxy)titanium dichloride, dimethylsilylene(tert-butylcyclopentadienyl)(3-phenyl-2-phenoxy)titanium dichloride, dimethylsilylene(tert-butylcyclopentadienyl)(1-naphthoxy-2-yl)titanium dichloride,
dimethylsilylene(tetramethylcyclopentadienyl)(2-phenoxy)titanium dichloride, dimethylsilylene(tetramethylcyclopentadienyl)(3-methyl-2-phenoxy)titanium dichloride, dimethylsilylene(tetramethylcyclopentadienyl)(3,5-dimethyl-2-phenoxy)titanium dichloride, dimethylsilylene(tetramethylcyclopentadienyl)(3-tert-butyl-2-phenoxy)titanium dichloride, dimethylsilylene(tetramethylcyclopentadienyl)(3-tert-butyl-5-methyl-2-phenoxy)titanium dichloride, dimethylsilylene(tetramethylcyclopentadienyl)(3,5-di-tert-butyl-2-phenoxy)titanium dichloride, dimethylsilylene(tetramethylcyclopentadienyl)(5-methyl-3-phenyl-2-phenoxy)titanium dichloride, dimethylsilylene(tetramethylcyclopentadienyl)(3-tertbutyldimethylsilyl-5-methyl-2-phenoxy)titanium dichloride, dimethylsilylene(tetramethylcyclopentadienyl)(5-methyl-3-trimethylsilyl-2-phenoxy)titanium dichloride, dimethylsilylene(tetramethylcyclopentadienyl)(3-tert-butyl-5-methoxy-2-phenoxy)titanium dichloride, dimethylsilylene(tetramethylcyclopentadienyl)(3-tert-butyl-5-chloro-2-phenoxy)titanium dichloride, dimethylsilylene(tetramethylcyclopentadienyl)(3,5-diamyl-2-phenoxy)titanium dichloride, dimethylsilylene(tetramethylcyclopentadienyl)(3-phenyl-2-phenoxy)titanium dichloride, dimethylsilylene(tetramethylcyclopentadienyl)(1-naphthoxy-2-yl)titanium dichloride,
dimethylsilylene(trimethylsilylcyclopentadienyl)(2-phenoxy)titanium dichloride, dimethylsilylene(trimethylsilylcyclopentadicnyl)(3-methyl-2-phenoxy)titanium dichloride, dimethylsilylene(trimethylsilylcyclopentadienyl)(3,5-dimethyl-2-phenoxy)titanium dichloride, dimethylsilylene(trimethylsilylcyclopentadienyl)(3-tert-butyl-2-phenoxy)titanium dichloride, dimethylsilylene(trimethylsilylcyclopentadienyl)(3-tert-butyl-5-methyl-2-phenoxy)titanium dichloride, dimethylsilylene(trimethylsilylcyclopentadienyl)(3,5-di-tert-butyl-2-phenoxy)titanium dichloride, dimethylsilylene(trimethylsilylcyclopentadienyl)(5-methyl-3-phenyl-2-phenoxy)titanium dichloride, dimethylsilylene(trimethylsilylcyclopentadienyl)(3-tertbutyldimethylsilyl-5-methyl-2-phenoxy)titanium dichloride, dimethylsilylene(trimethylsilylcyclopentadienyl)(5-methyl-3-trimethylsilyl-2-phenoxy)titanium dichloride, dimethylsilylene(trimethylsilylcyclopentadienyl)(3-tert-butyl-5-methoxy-2-phenoxy) titanium dichloride, dimethylsilylene(trimethylsilylcyclopentadienyl)(3-tert-butyl-5-chloro-2-phenoxy)titanium dichloride, dimethylsilylene(trimethylsilylcyclopentadienyl)(3,5-diamyl-2-phenoxy)titanium dichloride, dimethylsilylene(trimethylsilylcyclopentadienyl)(3-phenyl-2-phenoxy)titanium dichloride, dimethylsilylene(trimethylsilylcyclopentadienyl)(1-naphthoxy-2-yl)titanium dichloride,
dimethylsilylene(indenyl)(2-phenoxy)titanium dichloride, dimethylsilylene(indenyl)(3-methyl-2-phenoxy)titanium dichloride, dimethylsilylene(indenyl)(3,5-dimethyl-2-phenoxy)titanium dichloride, dimethylsilylene(indenyl)(3-tert-butyl-2-phenoxy)titanium dichloride, dimethylsilylene(indenyl)(3-tert-butyl-5-methyl-2-phenoxy)titanium dichloride, dimethylsilylene(indenyl)(3,5-di-tert-butyl-2-phenoxy)titanium dichloride, dimethylsilylene(indenyl)(5-methyl-3-phenyl-2-phenoxy)titanium dichloride, dimethylsilylene(indenyl)(3-tert-butyldimethylsilyl-5-methyl-2-phenoxy)titanium dichloride, dimethylsilylene(indenyl)(5-methyl-3-trimethylsilyl-2-phenoxy)titanium dichloride, dimethylsilylene(indenyl)(3-tert-butyl-5-methoxy-2-phenoxy)titanium dichloride, dimethylsilylene(indenyl)(3-tert-butyl-5-chloro-2-phenoxy)titanium dichloride, dimethylsilylene(indenyl)(3,5-diamyl-2-phenoxy)titanium dichloride, dimethylsilylene(indenyl)(3-phenyl-2-phenoxy)titanium dichloride, dimethylsilylene(indenyl)(1-naphthoxy-2-yl)titanium dichloride,
dimethylsilylene(fluorenyl)(2-phenoxy)titanium dichloride, dimethylsilylene(fluorenyl)(3-methyl-2-phenoxy)titanium dichloride, dimethylsilylene (fluorenyl) (3, 5-dimethyl-2-phenoxy) titanium dichloride, dimethylsilylene(fluorenyl)(3-tert-butyl-2-phenoxy)titanium dichloride, dimethylsilylene(fluorenyl)(3-tert-butyl-5-methyl-2-phenoxy)titanium dichloride, dimethylsilylene(fluorenyl)(3,5-di-tert-butyl-2-phenoxy)titanium dichloride, dimethylsilylene(fluorenyl)(5-methyl-3-phenyl-2-phenoxy)titanium dichloride, dimethylsilylene(fluorenyl)(3-tert-butyldimethylsilyl-5-methyl-2-phenoxy)titanium dichloride, dimethylsilylene(fluorenyl)(5-methyl-3-trimethylsilyl-2-phenoxy)titanium dichloride, dimethylsilylene(fluorenyl)(3-tert-butyl-5-methoxy-2-phenoxy)titanium dichloride, dimethylsilylene(fluorenyl)(3-tert-butyl-5-chloro-2-phenoxy)titanium dichloride, dimethylsilylene(fluorenyl)(3,5-diamyl-2-phenoxy)titanium dichloride, dimethylsilylene(fluorenyl)(3-phenyl-2-phenoxy)titanium dichloride, dimethylsilylene(fluorenyl)(1-naphthoxy-2-yl)titanium dichloride,
(tert-butylamide)tetramethylcyclopentadienyl-1,2-ethanediyltitanium dichloride, (methylamide)tetramethylcyclopentadienyl-1,2-ethanediyltitanium dichloride, (ethylamide)tetramethylcyclopentadienyl-1,2-ethanediyltitanium dichloride, (tert-butylamide)tetramethylcyclopentadienyldimethylsilanetitanium dichloride, (benzylamide)tetramethylcyclopentadienyldimethylsilanetitanium dichloride, (phenylphosphide)tetramethylcyclopentadienyldimethylsilanetitanium dichloride, (tert-butylamide)indenyl-1,2-ethanediyltitanium dichloride, (tert-butylamide)tetrahydroindenyl-1,2-ethanediyltitanium dichloride, (tert-butylamide)fluorenyl-1,2-ethanediyltitanium dichloride, (tert-butylamide)indenyldimethylsilanetitanium dichloride, (tert-butylamide)tetrahydroindenyldimethylsilanetitanium dichloride, (tert-butylamide)fluorenyldimethylsilanetitanium dichloride,
(dimethylaminomethyl)tetramethylcyclopentadienyltitanium(III) dichloride, (dimethylaminoethyl)tetramethylcyclopentadienyltitanium(III) dichloride, (dimethylaminopropyl)tetramethylcyclopentadienyltitanium(II I) dichloride, (N-pyrrolidinylethyl)tetramethylcyclopentadienyltitanium dichloride, (B-dimethylaminoborabenzene)cyclopentadienyltitanium dichloride, cyclopentadienyl(9-mesitylboraanthracenyl)titanium dichloride and the like, as well as compounds obtained by changing titanium of these compounds to zirconium or hafnium; compounds obtained by changing (2-phenoxy) thereof to (3-phenyl-2-phenoxy), (3-trimethylsilyl-2-phenoxy), or (3-tert-butyldimethylsilyl-2-phenoxy); compounds obtained by changing dimethylsilylene thereof to methylene, ethylene, dimethylmethylene(isopropylidene), diphenylmethylene, diethylsilylene, diphenylsilylene, or dimethoxysilylene; compounds obtained by changing dichloride thereof to difluoride, dibromide, diiodide, dimethyl, diethyl, diisopropyl, diphenyl, dibenzyl, dimethoxide, diethoxide, di(n-propoxide), di(isopropoxide), diphenoxide, or di(pentafluorophenoxide); compounds obtained by changing trichloride thereof to trifluoride, tribromide, triiodide, trimethyl, triethyl, triisopropyl, triphenyl, tribenzyl, trimethoxide, triethoxide, tri(n-propoxide), tri(isopropoxide), triphenoxide, or tri(peritafluorophenoxide); and the like.

Further, specific examples of the µ-oxo type transition metal compound represented by the general formula [4] include µ-oxobis[isopropylidene(cyclopentadienyl)(2-phenoxy)titanium chloride], µ-oxobis[isopropylidene(cyclopentadienyl)(3-tert-butyl-5-methyl-2-phenoxy)titanium chloride], µ-oxobis[isopropylidene(methylcyclopentadienyl)(2-phenoxy)titanium chloride], µ-oxobis[isopropylidene(methylcyclopentadienyl)(3-tert-butyl-5-methyl-2-phenoxy)titanium chloride], µ-oxobis[isopropylidene(tetramethylcyclopentadienyl)(2-phenoxy)titanium chloride], µ-oxobis[isopropylidene(tetramethylcyclopentadienyl)(3-tert-butyl-5-methyl-2-phenoxy)titanium chloride], µ-oxobis[dimethylsilylene(cyclopentadienyl)(2-phenoxy)titanium chloride], µ-oxobis[dimethylsilylene(cyclopentadienyl)(3-tert-butyl-5-methyl-2-phenoxy)titanium chloride], µ-oxobis[dimethylsilylene(methylcyclopentadienyl)(2-phenoxy)titanium chloride], µ-oxobis[dimethylsilylene(methylcyclopentadienyl)(3-tert-butyl-5-methyl-2-phenoxy)titanium chloride], µ-oxobis[dimethylsilylene(tetramethylcyclopentadienyl)(2-phenoxy)titanium chloride], µ-oxobis[dimethylsilylene(tetramethylcyclopentadienyl)(3-tert-butyl-5-methyl-2-phenoxy)titanium chloride] and the like. In addition, compounds obtained by changing chloride of these compounds to fluoride, bromide, iodide, C₁₋₄ alkyl (e.g. methyl, ethyl, isopropyl), phenyl, benzyl, C₁₋₄ alkoxide (e.g. methoxide, ethoxide, n-propoxide, isopropoxide), phenoxide, or halogenated phenoxide (e.g. pentafluorophenoxide), and the like may be illustrated.

Examples of the organoaluminium compound (C) include alkyl aluminium compounds wherein each alkyl group can have 1 to 6 carbon atoms. Examples thereof are trialkylaluminum such as trimethylaluminum, triethylaluminum, tri-n-butylaluminum, triisobutylaluminum, tri-n-hexylaluminum or tri-n-octylaluminum; dialkylaluminum hydride such as diethylaluminum hydride or diisobutylaluminum hydride; dialkylaluminum halide such as diethylaluminum chloride or diisobutylaluminum chloride, and the like. Preferably, the organoaluminum compound (C) is trialkylaluminium, e.g. triisobutylaluminium or tri-n-octylaluminium.

The prepolymerization catalyst component obtained according to the present invention can be used as a polymerization catalyst component for producing an olefin polymer. The olefin can have e.g. 1 to 20 carbon atoms. Examples of the olefin include linear olefins such as ethylene, propylene, 1-butene, 1-pentene, 4-methyl-1-pentene, 5-methyl-1-hexene, 1-hexene, 1-heptene, 1-octene, 1-nonene and 1-decene; cyclic olefins such as norbornene, 5-methylnorbornene, 5-ethylnorbornene, 5-butylnorbornene, 5-phenylnorbornene, 5-benzylnorbornene, tetracyclododecene, tricyclodecene, tricycloundecene, pentacyclopentadecene, pentacyclohexadecene, 8-methyltetracyclododecene, 8-ethyltetracyclododecene, 5-acetylnorbornene, 5-acetyloxynorbornene, 5-methoxycarbonylnorbornene, 5-ethoxycarbonylnorbornene, 5-methyl-5-methoxycarbonylnorbornene, 5-cyanonorbornene, 8-methoxycarbonyl tetracyclododecene, 8-methyl-8-tetracyclododecene and 8-cyanotetracyclododecene; diolefins such as 1,5-hexadiene, 1,4-hexadiene, 1,4-pentadiene, 1,7-octadiene, 1,8-nonadiene, 1,9-decadiene, 4-methyl-1,4-hexadiene, 5-methyl-1,4-hexadiene, 7-methyl-1,6-octadiene, 5-ethylidene-2-norbornene, dicyclopentadiene, 5-vinyl-2-norbornene, 5-methyl-2-norbornene, norbornadiene, 5-methylene-2-norbornene, 1,5-cyclooctadiene, 5,8-endomethylenehexahydronaphthalene, 1,3-butadiene, isoprene, 1,3-hexadiene, 1,3-octadiene, 1,3-cyclooctadiene and 1,3-cyclohexadiene, and the like. These may be used alone, or two or more thereof may be used in combination. Preferably, ethylene alone or an olefin other than ethylene may be used in combination with ethylene. More preferably, ethylene alone, or ethylene in combination with an α-olefin may be used. Still more preferably, ethylene alone, or at least one α-olefin selected from 1-butene, 1-hexene and 1-octene may be used in combination with ethylene.

As the polymerization process of the olefin, gas phase polymerization process is suitably used. The gas phase polymerization is usually conducted using a fluidized bed reactor, for example, any of the reactors disclosed in JP-A Nos. S58-201802, S59-126406 and H2-233708 may be used. Also, in the present process for the production, multiple gas phase fluidized bed reactors may be used, or a reactor other than the gas phase fluidized bed reactor may be used in combination with the gas phase fluidized bed reactor.

In the gas phase polymerization of the olefin, the polymerization temperature is usually 30 to 110°C, and preferably 60 to 100°C. The polymerization pressure may fall within the range to enable the olefin to be present as a gas phase in the fluidized bed reactor, but is usually 0.1 to 5.0 MPa, and preferably 1.5 to 3.0 MPa. Moreover, the gas flow rate in the reactor is usually 10 to 100 cm/sec, and preferably 20 to 70 cm/sec.

In addition to the prepolymerization catalyst component, the gas phase polymerization of the olefin is conducted using other catalyst component such as an organoaluminum compound, an organoaluminum oxy compound, a boron compound or the like depending on type of the prepolymerization catalyst component used. Also, the gas phase polymerization of the olefin may be conducted in the presence of an additive such as a fluidization aid or a static electricity removing additive, and may be conducted in the presence of a chain transfer agent such as hydrogen.

### EXAMPLES

Hereinafter, the present invention will be explained in more detail by way of Examples and Comparative Examples.

Measurements of each item in Examples were determined according to the method described below.
(1) Density (Unit: Kg/m³)
   The density was measured according to the method specified in JIS K7112-1980, method A. The sample was subjected to annealing as described in JIS K6760-1995.
(2) Melt Flow Rate (MFR, Unit: g/10 min)
   The melt flow rate was measured according to the method specified in JIS K7210-1995, under a condition of the load being 21.18 N, and the temperature being 190°C.
(3) Molecular Weight Distribution (Mw/Mn)
   The molecular weight distribution was measured by gel permeation chromatography (GPC) under the following condition. Calibration curve was constructed using standard polystyrene. The molecular weight distribution was evaluated in terms of a ratio (Mw/Mn) of the weight average molecular weight (Mw) and the number average molecular weight (Mn).
   Apparatus model: Type 150C, manufactured by Millipore Waters,
   Column: TSK-GEL GMH-HT 7.5 x 600, two columns
   Measurement temperature: 140°C
   Solvent: orthodichlorobenzene
   Solvent flow rate: 1.0 mL/min
   Measurement concentration: 5 mg/5 ml
   Detector: differential refractometry
(4) Bulk Density
   The bulk density was measured according to JIS K6760.

### Example 1

### (1) Prepolymerization

In a reactor having an internal volume of 210 liters which was equipped with a stirrer and which had been previously substituted with nitrogen were charged 80 liters of butane at an ordinary temperature, and then therein was charged 109 mmol of racemi-ethylenebis(1-indenyl)zirconium diphenoxide. Thereafter, the temperature in the reactor was raised to 50°C, and the mixture was stirred for 2 hours. The temperature in the reactor was lowered to 30°C, and 0.05 kg of ethylene was charged. Subsequently, 701 g of the co-catalyst support prepared by a process that is similar to the synthesis of the component (A) in Example 1 (1), (2) and (3) described in JP 2005-68170 A was charged. Thereafter, 0.05 liter of hydrogen was charged in terms of volume at normal temperature and under normal pressure. After the system was stabilized, therein was charged 157.5 mmol of triisobutylaluminum to initiate the polymerization.

Following initiation of the polymerization, the polymerization was carried out at a polymerization temperature in the reactor of 30°C for 0.5 hours. Thereafter, the temperature was raised to 50°C over 30 minutes, followed by conducting the polymerization at 50°C. Prepolymerization in total time period of 4 hours was performed in which: ethylene was fed at 0.7 kg/hour and hydrogen in terms of volume at normal temperature and under normal pressure was fed at a rate of 0.7 liter/hour in first 0.5 hours; and then ethylene was fed at 3.5 kg/hour and hydrogen in terms of volume at normal temperature and under normal pressure was fed at a rate of 10.5 liter/hour after a lapse of 0.5 hours since initiation of the polymerization. Following completion of the polymerization, the reactor was purged to give the internal pressure of 0.5 MPaG. The resulted slurry-like prepolymerization catalyst component was transferred to a drier, and dried while allowing nitrogen to flow to thereby obtain a prepolymerization catalyst component. An amount of the prepolymerized ethylene polymer in the prepolymerization catalyst component was 15.9 g per 1 g of the co-catalyst support, and a bulk density of the prepolymerization catalyst component was 430 kg/m³.

### (2) Gas Phase Polymerization

Using a continuous fluidized bed gas phase prepolymerization apparatus, copolymerization of ethylene and 1-hexene was carried out under conditions of a polymerization temperature of 85°C, a pressure of 2.0 MPaG, a hold-up amount of 80 kg, a gas composition of 91.20 mol% ethylene, 1.62 mol% hydrogen, 1.21 mol% 1-hexene and 5.97 mol% nitrogen, a circulating gas space velocity of 0.25 m/s, a feed rate of the prepolymerization catalyst component obtained in the above Example 1 (1) of 31 g/hour, a feed rate of triethylamine of 0.6 mmol/hour, and a feed rate of triisobutylaluminum of 20 mmol/hour to obtain particles of an ethylene-1-hexene copolymer at a production rate of about 21 kg/hour. The copolymer had a density of 918.6 kg/m³, and MFR of 0.63 g/10 min. Further, the particles of the ethylene-1-hexene copolymer had a bulk density of 454 kg/m³, and had fairly excellent morphology.

### Example 2

### (1) Prepolymerization

In a reactor having an internal volume of 210 liters, which was equipped with a stirrer and which had been previously substituted with nitrogen were charged 80 liters of butane at normal temperature, and then therein was charged 70 mmol of racemi-ethylenebis(1-indenyl)zirconium diphenoxide. Thereafter, the temperature in the reactor was raised to 50°C, and the mixture was stirred for 2 hours. The temperature in the reactor was lowered to 30°C, and 0.1 kg of ethylene was charged. Subsequently, 698 g of the co-catalyst support obtained by a process that is similar to the synthesis of the component (A) in Example 1 (1), (2) and (3) described in JP-A-2005-68170 was charged. After the system was stabilized, therein was charged 210 mmol of triisobutylaluminum to initiate the polymerization.

Following initiation of the polymerization, the polymerization was carried out at a polymerization temperature in the reactor of 30°C for 0.5 hours. Thereafter, the temperature was raised to 50°C over 30 min, followed by conducting the polymerization at 50°C. Prepolymerization in total time period of 4 hours was performed in which: ethylene was fed at 0.7 kg/hour in first 0.5 hours; and then ethylene was fed at 3.5 kg/hour and hydrogen in terms of volume at normal temperature and under normal pressure was fed at a rate of 7.0 liter/hour after a lapse of 0.5 hours since initiation of the polymerization. Following completion of the polymerization, the reactor was purged to give the internal pressure of 0.5 MPaG. The slurry-like prepolymerization catalyst component was transferred to a drier, and dried while allowing nitrogen to flow to thereby obtain the prepolymerization catalyst component. An amount of the prepolymerized ethylene polymer in the prepolymerization catalyst component was 14.0 g per 1 g of the co-catalyst support, and a bulk density of the prepolymerization catalyst component was 429 kg/m³.

### (2) Gas Phase Polymerization

Using a continuous fluidized bed gas phase prepolymerization apparatus, copolymerization of ethylene and 1-butene and 1-hexene was conducted under conditions of a polymerization temperature of 87.2°C, a pressure of 2.0 MPaG, a hold-up amount of 80 kg, a gas composition of 90.4 mol% ethylene; 1.34 mol% hydrogen; 1.66 mol% 1-butene; 0.48 mol% 1-hexene; and 6.12 mol% nitrogen, a circulating gas space velocity of 0.25 m/s, a feed rate of the prepolymerization catalyst component obtained in the above Example 2(1) of 30 g/hour, a feed rate of triethylamine of 0.6 mmol/hour, and a feed rate of triisobutylaluminum of 20 mmol/hour to obtain particles of an ethylene-1-butene-1-hexene copolymer at a production rate of about 22 kg/hour. The copolymer had a density of 920.4 kg/m³, and MFR of 0.7 g/10 min. Further, the particles of the ethylene-1-butene-1-hexene copolymer had a bulk density of 432 kg/m³, and had fairly excellent particle properties.

### Example 3

### (1) Prepolymerization

In a reactor having an internal volume of 210 liters which was equipped with a stirrer and which had been previously substituted with nitrogen were charged 80 liters of butane at normal temperature, and therein was charged 0.2 kg of ethylene. Thereafter, 105.3 mmol of racemiethylenebis(1-indenyl)zirconium diphenoxide was charged therein. Thereafter, the temperature in the reactor was raised to 50°C, and the mixture was stirred for 2 hours. The temperature in the reactor was kept unchanged at 50°C, and 0.2 kg of ethylene was charged. Subsequently, 701 g of the co-catalyst support obtained by a process that is similar to the synthesis of the component (A) in Example 1 (1), (2) and (3) described in JP-A-2005-68170 was charged. Thereafter, 0.4 liter of hydrogen was charged in terms of volume at normal temperature and under normal pressure. After the system was stabilized, therein was charged 157.5 mmol of triisobutylaluminum to initiate the polymerization.

Following initiation of the polymerization, the polymerization was conducted while keeping the polymerization temperature in the reactor of 50°C. Prepolymerization in total time period of 4 hours was performed in which: ethylene was fed at 0.7 kg/hour and hydrogen in terms of volume at normal temperature and under normal pressure was fed at a rate of 1.4 liter/hour in first 0.5 hours; and then ethylene was fed at 3.5 kg/hour and hydrogen in terms of volume at normal temperature and under normal pressure was fed at a rate of 12 liter/hour after a lapse of 0.5 hours since initiation of the polymerization. Following completion of the polymerization, the reactor was purged to give the internal pressure of 0.5 MPaG. The slurry state prepolymerization catalyst component was transferred to a drier, and dried while allowing nitrogen to flow to thereby obtain the prepolymerization catalyst component. A prepolymerized amount of the ethylene polymer in the prepolymerization catalyst component was 18.1 g per 1 g of the co-catalyst support, and a bulk density of the prepolymerization catalyst component was 388 kg/m³.

### (2) Gas Phase Polymerization

Using a continuous fluidized bed gas phase prepolymerization apparatus, copolymerization of ethylene and 1-hexene was carried out under conditions of a polymerization temperature of 85°C, a pressure of 2.0 MPaG, a hold-up amount of 80 kg, a gas composition of 92.8 mol% ethylene, 1.75 mol% hydrogen, 1.26 mol% 1-hexene and 4.19 mol% nitrogen, a circulating gas space velocity of 0.25 m/sec, a feed rate of the prepolymerization catalyst component obtained in the above Example 3 (1) of 31 g/hour, a feed rate of triethylamine of 0.6 mmol/hour, and a feed rate of triisobutylaluminum of 20 mmol/hour to obtain particles of an ethylene-1-hexene copolymer at a production rate of about 22 kg/hour. The copolymer had a density of 920.2 kg/m³, and MFR of 0.65 g/10 min. The particles of the ethylene-1-hexene copolymer had a bulk density of 404 kg/m³, and had fairly excellent particle properties.

### Comparative Example 1

### (1) Prepolymerization

In a reactor having an internal volume of 210 liters, which was equipped with a stirrer and which had been previously substituted with nitrogen was charged 705 g of the co-catalyst support obtained by a process that is similar to the synthesis of the component (A) in Example 1 (1), (2) and (3) described in JP2005-68170 A at normal temperature. Thereafter, 180 liters of butane were charged therein. Hydrogen in terms of volume at normal temperature and under normal pressure of 0.1 liter was charged, and 0.3 kg of ethylene was charged therein. Then, the temperature in the reactor was adjusted to 30°C. Separately, 70 mmol of racemi-ethylenebis(1-indenyl)zirconium diphenoxide, 210 mmol of triisobutylaluminum and 300 ml of hexane were mixed in a 1-liter flask in a nitrogen atmosphere, and stirred for mixing at 50°C for 4 hours. Thus resulting solution was charged in the reactor to initiate the polymerization.

Following initiation of the polymerization, operation was carried out at a polymerization temperature in the reactor of 30°C for 0.5 hours. Thereafter, the temperature was raised to 50°C over 30 min, followed by conducting the polymerization at 50°C. Prepolymerization in total time period of 4 hours was performed in which: ethylene was fed at 0.4 kg/hour in first 0.5 hours; and then ethylene was fed at 3.5 kg/hour and hydrogen in terms of volume at normal temperature and under normal pressure was fed at a rate of 3.5 liter/hour after a lapse of 0.5 hours since initiation of the polymerization. Following completion of the polymerization, the reactor was purged to give the internal pressure of 0.5 MPaG. The slurry state prepolymerization catalyst component was transferred to a drier, and dried while allowing nitrogen to flow to thereby obtain the prepolymerization catalyst component. A prepolymerized amount of the ethylene polymer in the prepolymerization catalyst component was 16.6 g per gram of the co-catalyst support, and a bulk density of the prepolymerization catalyst component was 374 kg/m³.

### (2) Gas Phase Polymerization

Using a continuous fluidized bed gas phase prepolymerization apparatus, copolymerization of ethylene, and 1-butene and 1-hexene was carried out under conditions of a polymerization temperature of 84.4°C, a pressure of 2.0 MPaG, a hold-up amount of 80 kg, a gas composition of 93.4 mol% ethylene, 0.53 mol% hydrogen, 2.22 mol% 1-butene, 0.52 mol% 1-hexene and 3.33 mol% nitrogen, a circulating gas space velocity of 0.25 m/s, a feed rate of the prepolymerization catalyst component obtained in the above Comparative Example 1 (1) of 31 g/hour, a feed rate of triethylamine of 0.6 mmol/hour, and a feed rate of triisobutylaluminum of 20 mmol/hour to obtain particles of an ethylene-1-butene-1-hexene copolymer at a production rate of about 18 kg/hour. The copolymer had a density of 918.7 kg/m³, and MFR of 0.73 g/10 min. Further, the particles of the ethylene-1-butene-1-hexene copolymer had a bulk density of 342 kg/m³.

## Claims

1. A process for producing a prepolymerization catalyst component, which comprises contacting a co-catalyst support (A), a metallocene compound (B) and an organoaluminum compound (C) to obtain a contact-treated product, and prepolymerizing an olefin in the presence of the contact-treated product, the process comprising the following steps (1), (2) and (3):
step (1): a step of subjecting a saturated aliphatic hydrocarbon compound solvent containing the metallocene compound (B) to a heat treatment at 40°C or higher;
step (2): a step of subjecting the heat treatment product obtained by the heat treatment in the step (1) to a contact treatment with the co-catalyst support (A); and
step (3): a step of subjecting the contact-treated product obtained by the contact treatment in the step (2) to a contact treatment with the organoaluminum compound (C).

2. The process according to claim 1, wherein the temperature at which the organoaluminum compound (C) is contacted in the step (3) is 70°C or lower.

3. The process according to claim 1, wherein the organoaluminum compound (C) is contacted in the presence of an olefin in the step (3).

4. The process according to any one of claims 1 to 3,
wherein the co-catalyst support (A) is a solid catalyst component obtained by contacting the following (a), (b), (c) and (d):
(a) a compound represented by the general formula [1]:
M¹L¹ₘ [1],
(b) a compound represented by the general formula [2]:
R¹ₜ₋₁TH [2],
(c) a compound represented by the general formula [3]:
R²ₜ₋₂TH₂ [3],
and
(d) a particle-like support,
wherein M¹ represents a metal atom of Group 1, 2, 12, 14 or 15 of the Periodic Table and m represents a number corresponding to the atomic valence of M¹, respectively; L¹ represents a hydrogen atom, a halogen atom or a hydrocarbon group and when there exist more than one L¹, they may be the same or different with each other; R¹ represents a group having an electron withdrawing group, or an electron-withdrawing group and when there exist more than one R¹, they may be the same or different with each other; R² represents a hydrocarbon group or a halogenated hydrocarbon group; T each independently represents a nonmetal atom of Group 15 or 16 of the Periodic Table; and t represents a number corresponding to the atomic valence of T of each compound.

5. A prepolymerization catalyst component obtainable by the process of any one of claims 1 to 4.

6. A process for producing an olefin polymer, which comprises polymerizing an olefin using the prepolymerization catalyst component of claim 5.
